# EUROPÄISCHE PATENTSCHRIFT

(11) **EP 2 803 870 B1**
(45) Veröffentlichungstag und Bekanntmachung des Hinweises auf die Patenterteilung: **16.03.2016**
(21) Anmeldenummer: 14167097.6
(22) Anmeldetag: 06.05.2014
(51) Int. Cl.: F16B 13/08

(54) **Dübel mit einem Hohlprofilschaft**
Dowel with a hollow profile shaft
Cheville dotée d'un tige de profilé creux

(30) Priorität: 14.05.2013 DE 202013102090 U
(43) Veröffentlichungstag der Anmeldung: 19.11.2014
(73) Patentinhaber: Klemke, Richard, 32689 Kalletal (DE)
(72) Erfinder: Klemke, Richard, 32689 Kalletal (DE)
(74) Vertreter: Ter Meer Steinmeister & Partner

(56) Entgegenhaltungen:
- DE-A1- 2 434 527
- DE-U1- 8 219 793
- DE-U1- 9 404 499

## Beschreibung

Die vorliegende Erfindung betrifft einen Dübel mit einem Hohlprofilschaft.

Dübel sind bekannte Befestigungsmittel zur Verankerung im Voll- oder Hohlbaustoffen, beispielsweise in einem Mauerwerk. Sie sind in äußerst vielfältigen Bauformen bekannt. In einer sehr verbreiteten Variante sind die Dübel dazu vorgesehen, in ein Bohrloch eingesetzt zu werden und ein weiteres Befestigungsmittel wie etwa eine Schraube aufzunehmen, die den Dübel beim Eindrehen aufspreizt. Darüber hinaus sind sogenannte Schlagdübel bekannt, die in das Bohrloch eingeschlagen werden und mit einem schraubenartigen Dorn aufgespreizt werden.

Der Vorzug eines Schlagdübels besteht in der Einfachheit seiner Montage, sowie in dem Umstand, dass kein zusätzliches Befestigungsmittel wie etwa eine Schraube eingesetzt werden muss. Allerdings sind die Einsatzmöglichkeiten der bekannten Schlagdübel begrenzt, da sie konstruktionsbedingt nur sehr begrenzte Lasten aufnehmen können und die Möglichkeit, zusätzlich eine Schraube, einen Haken o.ä. einzudrehen, nicht besteht. Außerdem besteht häufig der Wunsch, den Dübel flexibler einsetzen zu können und wahlweise nur als Schlagdübel einzusetzen oder ihn zusätzlich mit einer Schraube stärker zu verankern. Bei den herkömmlichen Dübeln stellte sich hierbei häufig das Problem, dass sich der Dübel zusammen mit der Schraube im Bohrloch dreht und das Eindrehen hierdurch erschwert wird bzw. unmöglich ist.

Es ist daher eine Aufgabe der vorliegenden Erfindung, einen Dübel zu schaffen, der sich flexibel einsetzen lässt und sich als Schlagdübel verwenden lässt, jedoch optional durch eine Schraube verstärken lässt, so dass seine Belastbarkeit erhöht wird. Beim Eindrehen einer Schraube in den eingesetzten Dübel soll ein Mitdrehen desselben möglichst verhindert werden.

Diese Aufgaben werden erfindungsgemäß durch einen Dübel mit den Merkmalen des Anspruchs 1 gelöst.

Der Hohlprofilschaft des erfindungsgemäßen Dübels umfasst einen plastisch verformbaren Spreizabschnitt, der auf gegenüberliegenden Seiten seiner Wandung keilförmige Durchbrechungen aufweist. Durch diese Durchbrechungen wird im Inneren des Spreizabschnitts ein keilförmiger Hohlraum geöffnet, dessen weiteres Ende (entsprechend dem Keilrücken) sich am vorderen Ende des Dübels befindet. Die Begriffe "vorn" und "hinten" beziehen sich hier und in der gesamten Anmeldung auf die Einsteckrichtung des Dübels. Dieser umfasst ferner einen Zugkeil, mit einem Keilkörper, der in den keilförmigen Hohlraum eingesetzt ist, und Nasen, die an das spitze hintere Ende des Zugkeils seitlich angeformt sind. Im eingesetzten Zustand des Zugkeils springen diese Nasen seitlich aus der Wandung des Hohlprofilschafts vor. Sie sind durch Sollbruchstellen mit dem Keilkörper verbunden, so dass bei Überschreitung einer bestimmten Belastungsgrenze die Nasen vom Keilkörper abreißen oder abbrechen.

Die Nasen dienen dazu, eine Zugkraft auf den Zugkeil zu übertragen und diesen entgegen der Einsteckrichtung des Dübels in den Hohlprofilschaft zu ziehen, so dass der Zugkeil den Spreizabschnitt aufspreizt. Zur Montage wird der Hohlprofilschaft des Dübels zunächst in ein Bohrloch eingeschoben, bis die seitlich vorspringenden Nasen an der Kante des Bohrlochs anschlagen. Wird der Hohlprofilschaft dann weiter nach vom in das Bohrloch eingedrückt oder eingeschlagen, ziehen die Nasen, die nicht in das Bohrloch eindringen können, den Zugkeil in der vorstehend beschriebenen Weise in den Hohlprofilschaft und spreizen den Spreizabschnitt auf. Hierdurch erhält der Hohlprofilschaft Halt im Bohrloch. Durch weiteres Einschlagen des Dübels überschreitet die Zugkraft auf die Nasen die Belastungsgrenze der Sollbruchstellen, so dass die Nasen vom Keilkörper abreißen. Der Hohlprofilschaft kann dann im aufgespreizten Zustand vollständig in das Bohrloch eingeschlagen werden.

Aufgrund des aufgespreizten Spreizabschnitts hat der Dübel auf diese Weise relativ festen Halt im Bohrloch und ist verdrehsicher darin befestigt, da der Spreizabschnitt aufgrund der Keilform des Zugkeils lediglich in zwei gegenüberliegende radiale Richtungen aufgespreizt wird und sich nicht gleichförmig zu allen Seiten aufweitet. Dies begünstigt das Eindrehen einer zusätzlichen Schraube, die optional in den Hohlprofilschaft eingesetzt werden kann. Der Schaft dieser Schraube wird vom hinteren Ende des Dübels her in diesen eingesetzt und eingedreht. Aufgrund der vorstehend beschriebenen asymmetrischen Spreizung des Dübels führt das hierbei ausgeübte Drehmoment nicht dazu, dass der Dübel sich innerhalb des Bohrlochs mitdreht, sondern er leistet im eingeschlagenen Zustand einen Widerstand gegen dieses Drehmoment.

Der erfindungsgemäße Dübel ist so konstruiert, dass der Spreizabschnitt durch das Eindrehen einer Schraube noch weiter aufgespreizt wird als durch die Zugbewegung des Zugkeils während des Einschlagens des Dübels. Es sind jedoch auch Fälle denkbar, in denen der Dübel auch ohne Schraube verwendet werden kann und bereits durch das Einschlagen ausreichenden Halt für den vorgesehenen Anwendungsfall hat. Beispielsweise lässt sich ein solcher Dübel zum Aufbringen einer Lattung oder einer Unterkonstruktion unter einer Decke verwenden, indem der durch ein Bohrloch in der Latte lediglich mit dem Daumen eingesteckt wird. Die Latte hat dann ausreichend Halt am Untergrund. Bei dieser Anwendung ist sogar ein zerstörungsfreies Lösen der Befestigung möglich, indem mittels eines Werkzeugs wie etwa einer Schraube oder eines Nagels der Zugkeil wieder in Richtung seiner Ausgangsposition zurückgeschoben wird und die Spreizung aufgehoben wird.

Gemäß einer bevorzugten Ausführungsform der vorliegenden Erfindung sind die Nasen des Zugkeils an die freien Enden von Stegen angeformt, die sich axial vom hinteren Ende des Keilkörpers erstrecken und in schlitzförmigen Verlängerungen der keilförmigen Durchbrechungen einliegen, wobei die Stege oder deren Verbindungen mit dem Keilkörper die Sollbruchstellen bilden. Die Stege erstrecken sich somit vom spitzen hinteren Ende des Keilkörpers her entgegen der Einsteckrichtung des Dübels. Die schlitzförmigen Verlängerungen der Durchbrechungen können als schmale Schlitze oder als Nuten in der Oberfläche der Wandung ausgebildet sein, derart, dass die Stege selbst in den schlitzförmigen Verlängerungen aufgenommen sind und lediglich die Nasen aus der Wandung vorspringen, so dass die Stege beim Einschieben oder Einschlagen des Hohlprofilschafts keinen Widerstand leisten, bis die Nasen an der Kante des Bohrlochs anschlagen. Durch die Länge der Stege kann bestimmt werden, in welcher axialen Position die Nasen aus der Wandung vorspringen, d. h., wie weit sich der Hohlprofilschaft in das Bohrloch einstecken lässt, bis die Nasen auf einen Widerstand treffen und das Aufspreizen mittels des Zugkeils beginnt. Weiter vorzugsweise umfasst der Hohlprofilschaft an seinem hinteren Ende einen Endabschnitt, an den sich der Spreizabschnitt anschließt, wobei der Spreizabschnitt in einem Bereich, der an den Endabschnitt angrenzt, einen Gewindeeingriffsbereich umfasst, in den eine durch den Endabschnitt gesteckte Schraube eingedreht werden kann. Der Dübel kann so ausgebildet sein, dass der Endabschnitt sich bei der Montage des Dübels nicht verformt, sondern lediglich der Spreizabschnitt.

Gemäß einer weiteren bevorzugten Ausführungsform weist der Keilkörper an seinem hinteren Ende einen Gewindeeingriffsbereich auf. Hierdurch erlangt die Schraube zusätzlichen Halt im Dübel.

Weiter vorzugsweise ist an das hintere Ende des Endabschnitts ein Radialbund angeformt. Dieser Radialbund stabilisiert das hintere Ende des Endabschnitts gegenüber einer mechanischen Verformung durch Schläge und begrenzt die Eindringtiefe des Hohlprofilschafts.

Weiter vorzugsweise weist der Hohlprofilschaft auf seiner Außenseite eine Profilierung mit sägezahnförmigem Querschnitt auf. Diese Profilierung verleiht dem Hohlprofilschaft zusätzlichen Halt im Bohrloch.

Gemäß einer weiteren bevorzugten Ausführungsform der Erfindung sind die Flanken des Keilkörpers und/oder die daran anliegenden Begrenzungsflächen des keilförmigen Hohlraums mit einer Profilierung zur Verbesserung des Reibschlusses zwischen dem Keilkörper und den Begrenzungsflächen versehen. Diese Profilierung dient dazu, den Zugkeil in seiner axialen Position zu stabilisieren. Insbesondere soll verhindert werden, dass der Zugkeil nach dem Abreißen der Nasen innerhalb des keilförmigen Hohlraums nach vorn rutscht und somit die Spreizung wieder aufgehoben wird.

Im folgenden soll ein bevorzugtes Ausführungsbeispiel der vorliegenden Erfindung anhand der Zeichnung näher erläutert werden.
- Fig. 1: ist eine perspektivische Ansicht einer bevorzugten Ausführungsform des erfindungsgemäßen Dübels;
- Fig. 2: ist eine Seitenansicht des erfindungsgemäßen Dübels, der um seine Hauptachse um 90° gegenüber Fig. 2 gedreht ist;
- Fig. 3: zeigt den Hohlprofilschaft des Dübels aus den Fig. 1 und 2 in einer Seitenansicht, in der er um seine Hauptachse um 90° gegenüber Fig. 2 gedreht ist;
- Fig. 4: ist eine perspektivische Ansicht des Zugkeils des Dübels aus den Fig. 1 und 2;
- Fig. 5: ist eine Seitenansicht des Zugkeils aus Fig. 4;
- Fig. 6: ist eine perspektivische Ansicht des Hohlprofilschafts aus Fig. 3; und
- Fig. 7: ist ein Längsschnitt durch den Hohlprofilschaft aus Fig. 3.

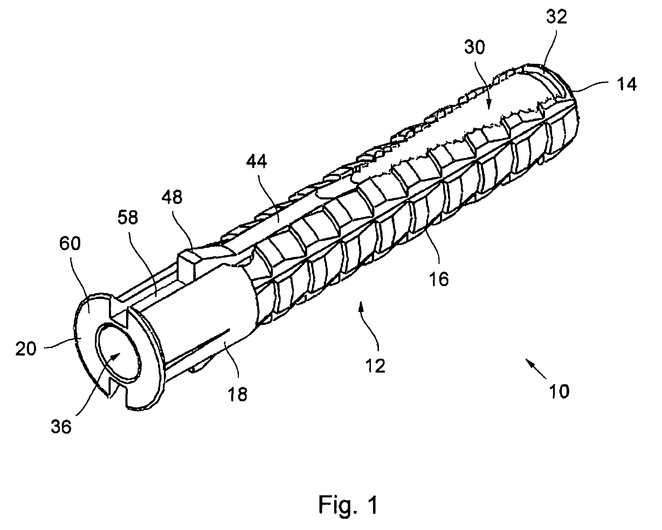

Der erfindungsgemäße Dübel 10 in Fig. 1 umfasst einen Hohlprofilschaft 12, der zur Aufnahme in einem nicht näher dargestelltes Bohrloch vorgesehen ist, welches beispielsweise in einem Mauerwerk vorhanden sein kann. Der vorliegende Dübel 10 ist jedoch in keiner Weise an die Montage in einem bestimmten Werkstoff beschränkt. Er wird mit seinem Einsteckende 14 voran in das Bohrloch eingesteckt, welches sich in Fig. 1 rechts oben befindet und im folgenden auch als vorderes Ende 14 bezeichnet werden soll, wobei die Einsteckrichtung in Fig. 1 schräg nach hinten weist.

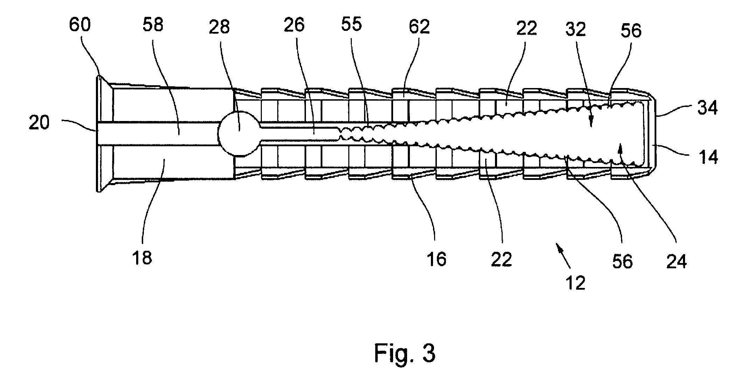

Der Hohlprofilschaft 12 umfasst verschiedene Schaftabschnitte, nämlich einen plastisch verformbaren Spreizabschnitt 16 und einen Endabschnitt 18, der sich am hinteren Ende 20 des Hohlprofilschafts 12 an den Spreizabschnitt 16 anschließt. Wie insbesondere in Fig. 3 näher dargestellt ist, weist der Spreizabschnitt 16 auf radial gegenüberliegenden Seiten seiner Wandung 22 keilförmige Durchbrechungen 24 auf. Diese Durchbrechungen 24 sind so angeordnet, dass ihr breiteres Ende zum vorderen Ende 14 des Dübels 10 weist, d. h., die Durchbrechungen 24 werden entgegen der Einsteckrichtung schmaler und laufen schließlich zu schmalen Schlitzen 26 zusammen, die axiale Verlängerungen der keilförmigen Durchbrechungen 24 bilden. Die hinteren Enden dieser Schlitze 26 laufen in kreisförmige Aussparungen 28 aus.

Durch die keilförmigen Durchbrechungen 24 wird die Wandung 22 des Spreizabschnitts 16 geschwächt, so dass dieser plastisch verformbar wird und sich zu gegenüberliegenden Seiten aufspreizen lässt. Hierzu dient ein Zugkeil 30. Er ist seitlich in den keilförmigen Hohlraum 32 eingesetzt, der im Inneren des Spreizabschnitts 16 durch die Durchbrechungen 24 in der Wandung 22 zugänglich ist. Entsprechend der Anordnung der Durchbrechungen 24 befindet sich das weitere Ende des keilförmigen Hohlraums 32 am Einsteckende 14 des Dübels 10 und wird dort von einer Stirnwand 34 verschlossen. Der Hohlraum 32 bildet somit in Einsteckrichtung eine keilförmige Erweiterung des axialen Kanals 36, der sich vollständig durch den Hohlprofilschaft 12 erstreckt, also sowohl durch den Endabschnitt 18 als auch durch den Spreizabschnitt 16.

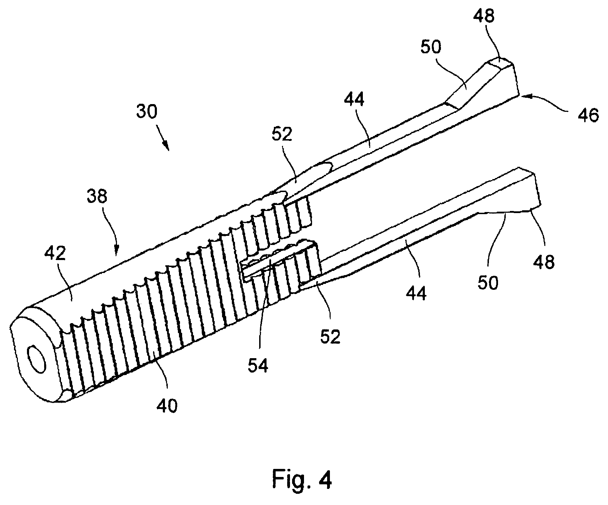

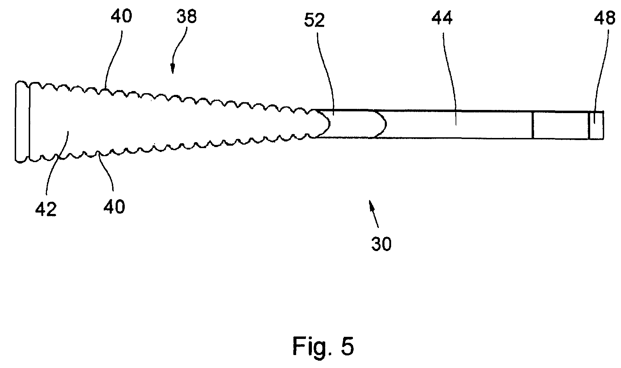

Der Zugkeil 30 selbst ist in Fig. 4 und 5 dargestellt. Er umfasst einen Keilkörper 38 mit flachen Keilflanken 40 sowie abgerundete Außenwände 42, die die gegenüberliegenden Keilflanken 40 verbinden. In der Darstellung in Fig. 4 ist somit der Zugkeil 30 oben und unten abgerundet, während die Keilflanken 40 seitlich liegen.

Entsprechend der Orientierung im eingesetzten Zustand im Hohlprofilschaft 12, die im folgenden noch näher beschrieben werden soll, soll das spitze Ende des Zugkeils 30, das in Fig. 4 und 5 rechts angeordnet ist, als hinteres Ende bezeichnet werden. An diesem hinteren Ende schließen sich an den Keilkörper 38 zwei parallele Stege 44 an, die sich etwa in der Verlängerung der gewölbten Seitenwände 42 gerade erstrecken, so dass ihr Abstand etwa der Breite des Keilkörpers 38 entspricht. An die freien Enden 46 dieser Stege sind seitlich Nasen 48 angeformt, die gegenüber den abgerundeten Seitenwänden 42 und den Außenseiten der Stege 44 gegenüberliegend nach außen vorspringen und somit den breitesten Bereich des Zugkeils 30 darstellen. Die Nasen 48 weisen selbst in der Ebene, in der die Stege 44 liegen, einen dreieckigen Querschnitt auf, mit einer flachen äußeren Flanke 50, über welche sich die Nasen 48 von den Stegen 44 ausgehend zum hinteren Ende des Zugkeils 30 hin verbreitern und dort ihre maximale Breite aufweisen. An ihren Innenseiten sind die Stege 44 flach.

Die Stellen 52, an denen die Stege 44 mit dem Keilkörper 38 verbunden sind, sind als Sollbruchstellen ausgebildet. Dies wird bei der vorliegenden Ausführungsform durch eine Schwächung des Übergangs erreicht, nämlich dadurch, dass die Dicke der Verbindungsstelle der Stege 44 relativ zu der übrigen Stegdicke verringert ist. Wird ein Zug auf die Nasen 48 zum hinteren Ende des Zugkeils 30 hin ausgeübt, d. h. in der Erstreckungsrichtung der Stege 44, reißen die Stege 44 bei Überschreiten einer vorbestimmten Zuglast vom Keilkörper 38 ab.

Zwischen den Stegen 44 weist der Keilkörper 38 eine schlitzförmige Aussparung 54 auf, die einen Gewindeeingriffsbereich für das Ende eines Schraubenschafts darstellt, wie im folgenden noch näher erläutert wird.

Wie in Fig. 1 dargestellt ist, lässt sich der Zugkeil 30 durch seitliches Einschieben in den Spreizabschnitt 16 derart in den keilförmigen Hohlraum 32 einpassen, dass dieser von dem Keilkörper 38 ausgefüllt wird und die Flanken 40 des Keilkörpers 38 an den seitlichen Begrenzungsflächen 56 (siehe Fig. 5) anliegen. Im eingepassten Zustand schließen dann die abgerundeten Seitenwände 42 des Keilkörpers 38 etwa mit der Wandung 22 des Spreizabschnitts 16 ab. Die Stege 44 liegen in den schlitzförmigen Verlängerungen 26 der keilförmigen Durchbrechungen 24 in den Wandungen 22 ein. Da die Stege 44 etwas länger bemessen sind als die Länge der schlitzförmigen Verlängerungen 26 einschließlich der kreisförmigen Aussparungen 28 an deren Enden, sind die Enden der Stege 44, welche die Nasen 48 tragen, in seitlichen Nuten 58 aufgenommen, die sich in der Verlängerung der schlitzförmigen Aussparungen 26 über die Außenwände des Endabschnitts 18 bis zum hinteren Ende 20 des Dübels 10 erstrecken und dort einen Radialbund 60 durchbrechen, der den Endabschnitt 18 am hinteren Ende 20 des Dübels 10 abschließt.

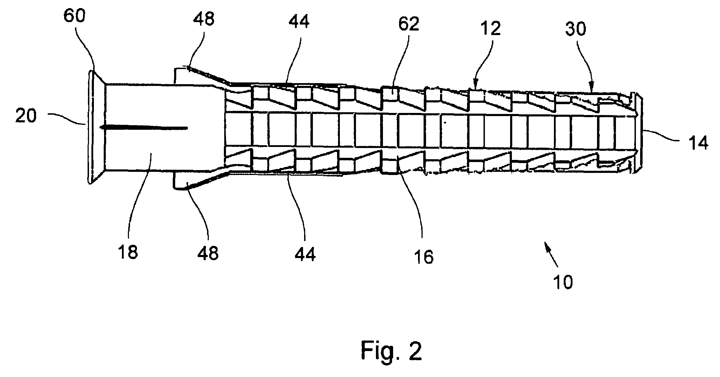

Wie insbesondere in Fig. 2 deutlich wird, springen die Nasen 48 im eingesetzten Zustand des Zugkeils 30 radial deutlich gegenüber der Wandung 22 des Hohlprofilschafts 12 vor.

Die Montage des vorstehend beschriebenen Dübels 10 soll im folgenden beschrieben werden. Sie umfasst verschiedene Phasen.

### A) Einsetzen des Dübels in das Bohrloch

Zunächst wird der Dübel 10 mit seinem vorderen Ende 14 voran in ein Bohrloch eingeschoben, das zu diesem Zweck in einem Verankerungsbereich vorbereitet worden ist, beispielsweise in einem Mauerwerk. Der Durchmesser des Bohrlochs ist so zu bemessen, dass er im wesentlichen dem Durchmesser des Spreizabschnitts 16 entspricht, oder nur geringfügig größer.

Der Dübel 10 wird eingeschoben, bis die äußeren Flanken 50 der beiden Nasen 48 an die Kante des Bohrlochs anschlagen. Da der Dübel 10 sich an dieser Stelle verbreitert, ist ein weiteres loses Einschieben des Dübels 10 ohne größeren Kraftaufwand nicht mehr möglich.

### B) Einschlagen des Dübels

Der Dübel 10 wird anschließend durch Schläge auf sein hinteres Ende 20 weiter in das Bohrloch getrieben. Hierbei leisten die Nasen 48 an der Kante des Bohrlochs einen Widerstand und bleiben in ihrer Position, während der Hohlprofilschaft 12 in der Einsteckrichtung weiter in das Bohrloch getrieben wird. Hierbei nähern sich die Nasen 48 dem hinteren Ende 20 des Dübels 10 und üben über die Stege 44 eine Zugkraft auf den Keilkörper 38 aus. Dieser wird in das spitze hintere Ende des keilförmigen Hohlraums 32 hineingezogen und spreizt den Spreizabschnitt 16 in radialer Richtung auf.

### C) Vollständiges Eintreiben des Dübels

Durch das vorstehend beschriebene Aufspreizen des Spreizabschnitts 16 wächst der Widerstand gegen ein weiteres Versenken des Dübels 10 im Bohrloch. Der Widerstand wird schließlich so groß, dass die Zuglast auf die Sollbruchstelle 52 die Belastungsgrenze überschreitet und somit schließlich die Stege 44 vom spitzen Ende des Keilkörpers 38 abreißen.

Der Dübel 10 kann dann weiter vollständig in das Bohrloch durch Schläge auf sein hinteres Ende 20 eingetrieben werden, während die Nasen 48 entlang der Nuten 58 bis zum Radialbund 60 gleiten. Der Dübel 10 ist dann vollständig im Bohrloch versenkt.

### D) Eindrehen einer Schraube

Im eingetriebenen Zustand lässt sich der Dübel 10 durch eine Schraube verstärken. Diese wird vom hinteren Ende 20 des Dübels 10 her in den Endabschnitt 18 eingeführt und kann zunächst frei in dem axialen Kanal 36 (Fig. 1, 6 und 7) im Endabschnitt 18 gleiten, bis ihr vorderes Ende auf einen Gewindeeingriffsbereich 55 des Spreizabschnitts 16 bzw. den Gewindeeingriffsbereich 54 des Zugkeils 30 trifft, der darin positioniert ist. Durch Drehen der Schraube schneidet sich ihr Außengewinde in diese Gewindeeingriffsbereiche 54,55 ein.

Hierdurch erlangt die Schraube festen Halt im Hohlprofilschaft 12. Gegebenenfalls wird der Zugkeil 30 durch dieses Einschrauben weiter in Richtung des hinteren Ende 20 des Dübels 10 gezogen, so dass der Spreizabschnitt 16 noch weiter aufgespreizt wird.

Je nach voraussichtlicher Belastung des Dübels 10 kann gegebenenfalls auf das Eindrehen der Schraube gemäß Phase D verzichtet werden, so dass der Dübel 10 allein als Schlagdübel verwendet wird und hierdurch bereits ausreichenden Halt im Bohrloch findet. Bei Verwendung einer Schraube erweist es sich allerdings als vorteilhaft, dass sich der Spreizabschnitt 16 lediglich in zwei gegenüberliegenden radialen Richtungen aufspreizt, und nicht gleichförmig radial nach allen Seiten. Hierdurch wird der Hohlprofilschaft 12 asymmetrisch, und ein Verdrehen des Dübels 10 im Bohrloch ist nicht mehr ohne weiteres möglich. Das auf die Schraube ausgeübte Drehmoment führt somit nicht zu einem Mitdrehen des Dübels 10 zusammen mit der Schraube innerhalb des Bohrlochs.

Für festen Halt des Spreizabschnitts 16 im Bohrloch sorgt zusätzlich eine Profilierung 62 auf der Außenseite des Hohlprofilschafts 12, die entlang der Axialrichtung des Dübels 10, d. h. entlang der Einschubrichtung einen etwa sägezahnförmigen Querschnitt aufweist.

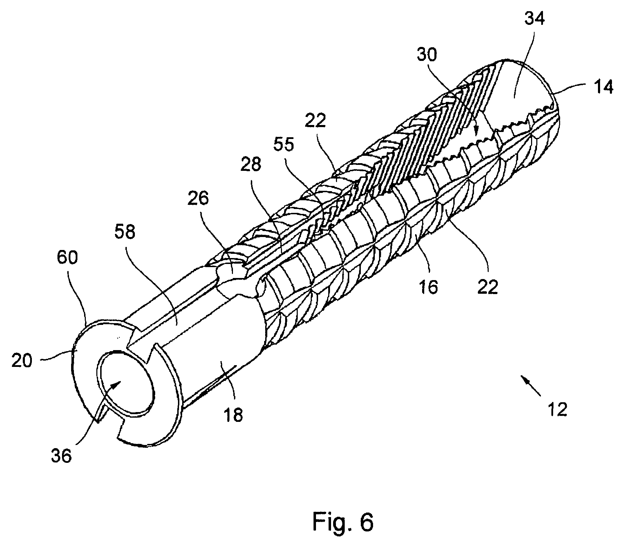

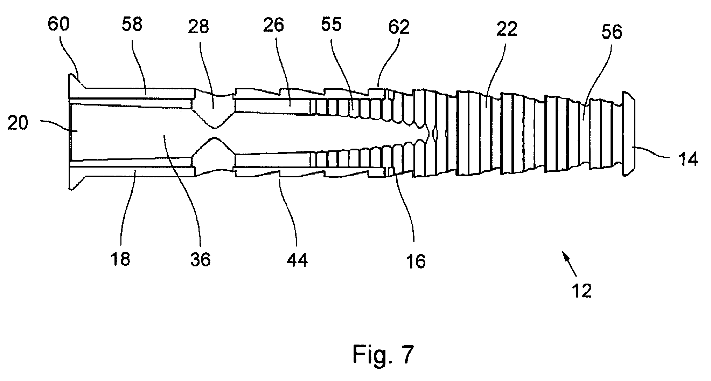

Damit der Keilkörper 38 des Zugkeils 30 sich im aufgespreizten Zustand des Spreizabschnitts 16 nicht wieder zum vorderen Ende 14 des Dübels 10 verschieben kann, so dass die Spreizung nachlässt, wenn die Stege 44 vom Keilkörper 38 abgerissen sind, weisen die Flanken 40 des Keilkörpers 38 eine Rippenstruktur als Profilierung zur Verbesserung des Reibflusses zwischen dem Keilkörper 38 und den Begrenzungsflächen 56 des keilförmigen Hohlraums 32 auf. Wie insbesondere in Fig. 6 und 7 nochmals deutlich gezeigt ist, sind die Begrenzungsflächen 56 selbst mit einer entsprechenden Rippenstruktur versehen.

Der Dübel 10 lässt sich gegebenenfalls wieder lösen, indem der Zugkeil 30 mittels eines spitzen Werkzeugs, das in den Axialkanal 36 eingeführt wird, wieder in Richtung des vorderen Endes 14 geschoben wird. Eine in den Dübel in Phase D eingedrehte Schraube muss zu diesem Zweck vorher wieder herausgedreht werden.

## Patentansprüche

1. Dübel (10) mit einem Hohlprofilschaft (12) zur Aufnahme einer Schraube, **dadurch gekennzeichnet, dass** der Hohlprofilschaft (12) einen plastisch verformbaren Spreizabschnitt (16) umfasst, der auf radial gegenüberliegenden Seiten seiner Wandung (22) keilförmige Durchbrechungen (24) aufweist, durch die im Inneren des Spreizabschnitts (16) ein keilförmiger Hohlraum (32) geöffnet wird, der sich zum in Einsteckrichtung weisenden vorderen Ende (14) des Dübels (10) hin erweitert, und dass der Dübel (10) ferner einen Zugkeil (30) umfasst, mit einem Keilkörper (38), der seitlich in den keilförmigen Hohlraum (32) eingesetzt ist, und Nasen (48), die an das spitze hintere Ende des Zugkeils (30) seitlich angeformt und über Sollbruchstellen (52) mit dem Keilkörper (38) verbunden sind und im eingesetzten Zustand des Zugkeils (30) seitlich aus der Wandung (22) des Hohlprofilschafts (12) vorspringen.

2. Dübel gemäß Anspruch 1, **dadurch gekennzeichnet, dass** die Nasen (48) des Zugkeils (30) an die freien Enden von Stegen (44) angeformt sind, die sich axial vom hinteren Ende des Keilkörpers (38) erstrecken und in schlitzförmigen Verlängerungen (26) der keilförmigen Durchbrechungen (24) einliegen, und dass die Stege (44) oder deren Verbindungen mit dem Keilkörper (38) die Sollbruchstellen (52) bilden.

3. Dübel gemäß Anspruch 1 oder 2, **dadurch gekennzeichnet, dass** der Hohlprofilschaft (12) an seinem hinteren Ende einen Endabschnitt (18) umfasst, an den sich der Spreizabschnitt (16) anschließt, und dass der Spreizabschnitt (16) in einem an den Endabschnitt (18) angrenzenden Bereich einen Gewindeeingriffsbereich (55) umfasst, in den eine durch den Endabschnitt (18) gesteckte Schraube eingedreht werden kann.

4. Dübel gemäß Anspruch 3, **dadurch gekennzeichnet, dass** der Keilkörper (38) an seinem hinteren Ende einen Gewindeeingriffsbereich (54) aufweist

5. Dübel gemäß Anspruch 3 oder 4, **dadurch gekennzeichnet, dass** an das hintere Ende des Endabschnitts (18) ein Radialbund (60) angeformt ist.

6. Dübel gemäß einem der vorhergehenden Ansprüche, **dadurch gekennzeichnet, dass** der Hohlprofilschaft (12) auf seiner Außenseite eine Profilierung (62) mit sägezahnförmigem Querschnitt entlang der Axialrichtung aufweist.

7. Dübel gemäß einem der vorhergehenden Ansprüche, **dadurch gekennzeichnet, dass** die Flanken (40) des Keilkörpers (38) und/oder die daran anliegenden Begrenzungsflächen (56) des keilförmiger Hohlraums (32) mit einer Profilierung zur Verbesserung des Reibschlusses zwischen dem Keilkörper (38) und den Begrenzungsflächen (56) versehen sind.

## Claims

1. Dowel (10) with a hollow profile shaft (12) for receiving a screw, **characterized in that** the hollow profile shaft (12) comprises a plastically deformable spreading section (16) comprising wedge shaped cut outs (24) on radially opposite sides of its wall (22) by which a wedge shaped hollow space (32) is opened in the interior of the spreading section (16) which enlarges towards the front end (14) of the dowel (10) in the insertion direction, said dowel (10) further comprising a pulling wedge (30) with a wedge body (38) inserted laterally into the wedge shaped hollow space (32) and lugs (48) formed at the pointed rear end of the pulling wedge (30) and being connected to the wedge body (38) by predetermined breaking points (52) and protruding laterally from the wall (22) of the hollow profile shaft (12) in the inserted state of the pulling wedge (30).

2. Dowel according to claim 1, **characterized in that** the lugs (48) of the pulling wedge (30) are formed at the free ends of webs (44) extending axially from the rear end of the wedge body (38) and lying within slit shaped extensions (26) of the wedge shaped cut outs (24), wherein the webs (44) or their connections to the wedge body (38) form the predetermined breaking points (52).

3. Dowel according to claim 1 or 2, **characterized in that** the hollow profile shaft (12) comprises an end section (18) at its rear end connected to the spreading section (16), and the spreading section (16) comprises a thread engagement portion (55) in a portion adjacent to the end section (18) in which a screw can be screwed in which is inserted into the end section (18).

4. Dowel according to claim 3, **characterized in that** the wedge body (38) comprises a thread engagement portion (54) at its rear end.

5. Dowel according to claim 3 or 4, **characterized in that** a radial flange (60) is formed at the rear end of the end section (18).

6. Dowel according to one of the preceding claims, **characterized in that** the hollow profile shaft (12) comprises a profile (62) at its outer surface with a sawtooth shaped cross section along the axial direction.

7. Dowel according to one of the preceding claims, **characterized in that** the slopes (40) of the wedge body (38) and/or the delimiting surfaces (56) of the wedge shaped hollow space (32) adjusting thereto comprise a profile for improving the friction between the wedge body (38) and the delimiting surfaces (56).

## Revendications

1. Cheville (10) ayant une tige profilée creuse (12) pour recevoir une vis, **caractérisée en ce que** la tige profilée creuse (12) comprend une partie expansible plastiquement déformable (16) qui comporte, sur des côtés radialement opposés de sa paroi (22), des ouvertures en forme de coin (24) par lesquelles une cavité en forme de coin (32) débouche sur l'intérieur de la partie expansible (16), laquelle cavité s'étend jusqu'à l'extrémité avant (14) de la cheville dans une direction d'insertion (10), et **en ce que** la cheville (10) comprend en outre un coin de traction (30) ayant un corps de coin (38) qui est inséré latéralement dans la cavité en forme de coin (32), et des tenons (48) qui sont formés latéralement sur l'extrémité arrière du coin de traction (30) et qui sont reliés au corps de coin (38) par des points de rupture programmée et qui, dans l'état inséré du coin de traction (30), font latéralement saillie à partir de la paroi (22) de la tige profilée creuse.

2. Cheville selon la revendication 1, **caractérisée en ce que** les tenons (48) du coin de traction (30) sont formés sur les extrémités libres de nervures (44) qui s'étendent axialement à partir de l'extrémité arrière du corps de coin (38) et sont logés dans des extensions en forme de fente (26) des ouvertures en forme de coin (24), et **en ce que** les nervures (44) ou leurs liaisons avec le corps de coin (38) forment les points de rupture programmée.

3. Cheville selon la revendication 1 ou 2, **caractérisée en ce que** la tige profilée creuse (12) comprend une partie d'extrémité (18) sur son extrémité arrière qui est adjacente à la partie expansible (16), et **en ce que** la partie expansible (16) comprend, dans une zone contigüe à la partie d'extrémité (18), une zone en prise vissée (55) dans laquelle une vis insérée à travers la partie d'extrémité (18) peut être tournée.

4. Cheville selon la revendication 3, **caractérisée en ce que** le corps de coin (38) comporte, sur son extrémité arrière, une zone en prise vissée (54).

5. Cheville selon la revendication 3 ou 4, **caractérisée en ce qu'**une collerette radiale (60) est formée sur l'extrémité arrière de la partie d'extrémité (18).

6. Cheville selon l'une des revendications précédentes, **caractérisée en ce que** la tige profilée creuse (12) comporte, sur son côté extérieur, un profil (62) ayant une section transversale en dents de scie le long de la direction axiale.

7. Cheville selon l'une des revendications précédentes, **caractérisée en ce que** les flancs (40) du corps de coin (38) et/ou les surfaces de limitation (56) de la cavité en forme de coin (32), venant en butée contre ceux-ci, sont pourvus d'un profilé pour améliorer le contact de frottement entre le corps de coin (38) et les surfaces de limitation (56).
